Europäisches Patentamt

European Patent Office

Office européen des brevets

(19)

(11) **EP 0 912 380 B1**

(12) **EUROPÄISCHE PATENTSCHRIFT**

(45) Veröffentlichungstag und Bekanntmachung des Hinweises auf die Patenterteilung:
**27.09.2000  Patentblatt 2000/39**

(51) Int Cl.$^7$: **B60T 8/00**

(86) Internationale Anmeldenummer:
**PCT/EP97/03336**

(21) Anmeldenummer: **97929290.1**

(22) Anmeldetag: **25.06.1997**

(87) Internationale Veröffentlichungsnummer:
**WO 98/03383 (29.01.1998 Gazette 1998/04)**

(54) **VERFAHREN ZUR VERBESSERUNG DES REGELVERHALTENS EINES BLOCKIERSCHUTZREGELUNGSSYSTEMS**

METHOD OF IMPROVING ABS CONTROL BEHAVIOUR

PROCEDE POUR AMELIORER LE COMPORTEMENT EN REGULATION D'UN SYSTEME ANTIBLOCAGE

(84) Benannte Vertragsstaaten:
**DE FR GB**

(30) Priorität: **18.07.1996  DE 19628971**

(43) Veröffentlichungstag der Anmeldung:
**06.05.1999  Patentblatt 1999/18**

(73) Patentinhaber: **Continental Teves AG & Co. oHG**
**60488 Frankfurt (DE)**

(72) Erfinder:
• **SCHMIDT, Holger**
**D-35435 Wettenberg (DE)**
• **BATISTIC, Ivica**
**D-60385 Frankfurt am Main (DE)**

(74) Vertreter: **Blum, Klaus-Dieter**
**Continental Teves AG & Co. oHG,**
**Guerickestrasse 7**
**60488 Frankfurt (DE)**

(56) Entgegenhaltungen:
EP-A- 0 293 561       WO-A-90/09301
DE-C- 4 418 772       FR-A- 2 662 982

**Beschreibung**

Die Erfindung bezieht sich auf ein Verfahren zur Verbesserung des Regelverhaltens eines Blockierschutzregelungssystems, bei dem aus dem Drehverhalten der Fahrzeugräder eine Fahrzeug-Referenzgeschwindigkeit, die als Bezugsgröße zur Ermittlung des Radschlupfes der einzelnen Räder dient, und Kriterien zum Erkennen einer Kurvenfahrtsituation und der Kurvenrichtung gewonnen werden, wobei zur Kurvenfahrterkennung die Radschlupfwerte mit Hilfe eines Tiefpasses gefiltert und die gefilterten Werte miteinander verglichen werden.

Es ist bereits bekannt, die Funktionen eines ABS zu erweitern, indem das System zum Verbessern der Fahrstabilität bzw. Bremsstabilität in der Kurve eingesetzt wird. Hierzu wird während einer Kurvenfahrt und einer Teilbremsung, d.h. bei einem Bremsvorgang, bei dem die ABS-Ansprechschwellen nicht erreicht werden, durch eine gezielte Verzögerung des Bremsdruckaufbaus an den kurveninneren Rädern im Vergleich zum Bremsdruck an den kurvenäußeren Rädern ein stabilisierendes Moment um die Hochachse des Fahrzeugs hervorgerufen ("Bremsanlage und Schlupf-Regelsystem der neuen 7er-Reihe von BMW", ATZ 97(1995), Seiten 8-15 und "Bremsanlage und Schlupf-Regelungssysteme der neuen Baureihe 5 von BMW", ATZ 98 (1996) Seiten 188-194). Die Information über den aktuellen Lenkwinkel wird, wenn kein Lenkwinkelsensor verwendet wird, aus der Querbeschleunigung abgeleitet, die wiederum aus den Radsensorsignalen berechnet wird.

Aus der DE 34 13 738 C2 (P 5547) ist ein Blokkierschutzregelungssystem (ABS) mit einer Kurvenfahrterkennungsschaltung, die auf der Radschlupfmessung beruht, bekannt. Zur Kurvenfahrterkennung werden die Schlupfwerte an den Rädern einer Fahrzeugseite addiert, mit der Schlupfsumme der Räder der anderen Fahrzeugseite verglichen und ein Kurvenfahrterkennungssignal erzeugt, sobald die Differenz der Schlupfsummen einen vorgegebenen Grenzwert überschreitet. Bei Kurvenfahrterkennung werden dann Auswahlkriterien, wie "Select-low" oder "Select-high", nach denen der Druckverlauf in den einzelnen Bremsdruckregelkanälen dieser Bremsanlage geregelt wird, und Grenzwerte für das Wirksamwerden dieser Auswahlkriitierien variiert. Auf diese Weise soll die Regelung den unterschiedlichen Bedingungen während einer Geradeausfahrt und während einer Kurvenfahrt angepaßt werden.

Aus der älteren DE 21 19 590 A1 ist es bekannt, ein Kurvenfahrterkennungssignal mit Hilfe eines Querbeschleunigungsmeßgerätes, wie eines Quecksilberschalters, zu gewinnen.

Die Berechnung des gefilterten Radschlupfes und die Auswertung dieser Größe zur Bestimmung von Kriterien für eine Kurvenfahrt sind in der nicht vorveröffentlichten Patentanmeldungen DE 195 22 634 A1 (P 7914) beschrieben. Zur Kurvenfahrterkennung werden nach diesen Schriften die gefilterten Radschlupfwerte miteinander verglichen und ausgewertet. Kurvenfahrt liegt vor, wenn gleichzeitig der gefilterte Radschlupf an beiden Vorderrädern über einem vorgegebenen Schlupf-Maximalwert und der gefilterte Radschlupf eines Hinterrades über einem ebenfalls vorgegebenen Schlupf-Maximalwert und der gefilterte Radschlupf des zweiten Hinterrades unter einem bestimmten Schlupf-Minimalwert liegen.

Bei Kurvenfahrterkennung wird nach der ebenfalls nicht vorveröffentlichten Patentanmeldung DE 195 22 632 A1 (P 7916) auf einen Sonder- bzw.Kurvenfahrt-Regelmodus umgeschaltet.

Der Erfindung liegt nun die Aufgabe zugrunde, bei einem Verfahren der eingangs genannten Art die Auswertbarkeit der Meßsignale und insbesondere das sichere Erkennen einer Kurvenfahrtsituation im Gegensatz zu einer Geradeausfahrt zu verbessern.

Es hat sich gezeigt, daß diese Aufgabe durch das im beigefügten Anspruch 1 beschriebene Verfahren gelöst werden kann, dessen Besonderheit darin besteht, daß als Tiefpaß zur Verarbeitung der Radschlupfwerte ein Filter erster Ordnung verwendet wird, dessen Zeitkonstante in Abhängigkeit von der Beschleunigung des jeweiligen Rades variiert wird. Vorteilhafterweise wird dabei die Zeitkonstante $T_i$ des Filters, ausgehend von einem Minimalwert $T_{min}$ , nach der Beziehung

$$T_i = T_{min} + (a_{grenz} - a_i)/k_1$$

mit i = 1 ... 4

erhöht, wenn die Beschleunigung $a_i$ des jeweiligen Rades i einen vorgegebenen Grenzwert unterschreitet (in anderen Worten: einen Verzögerungsgrenzwert überschreitet).

Der gefilterte Radschlupf ist ein Schlüsselsignal einer solchen Regelung. Durch die Erhöhung der Zeitkonstante bei höheren Radverzögerungen, d.h. unter dem vorgegebenen Grenzwert liegenden Radbeschleunigungen, wird die Erkennungssicherheit des Schlupfzustandes entscheidend verbessert. Bei höherer Radbeschleunigung ist der Mindestwert der Filterzeitkonstante bestimmend.

Ein weiteres vorteilhaftes Ausführungsbeispiel der Erfindung besteht darin, daß bei Verwendung von programmgesteuerten Schaltungen die gefilterten Radschlupfwerte $fws_i$ radindividuell nach der Beziehung

$$fws_{ineu} = fws_{ialt} + (v_{REF} - v_i - fws_{ialt})/T_i$$

gebildet werden, wobei mit '$fws_{neu}$' der im Arbeitstakt zuletzt ermittelte, mit '$fws_{alt}$' der im Arbeitstakt zuvor ermittelte gefilterte Radschlupfwert, mit '$v_{REF}$' eine Fahrzeugreferenzgeschwindigkeit, mit '$v_i$, die Radgeschwindigkeit und mit '$T_i$' die variable Zeitkonstante bezeichnet sind.

Weitere Einzelheiten, Vorteile und Anwendungsmöglichkeiten der Erfindung gehen aus der folgenden Darstellung anhand der beigefügten Abbildungen hervor.

Es zeigen:

Fig. 1    die wesentlichen elektronischen Komponenten oder Funktionsblöcke einer Schaltungsanordnung zur Durchführung des erfindungsgemäßen Verfahrens und

Fig. 2    im Flow-Chart die einzelnen Schritte eines Unterprogramms, durch das das erfindungsgemäße Verfahren ausgeführt wird.

Sowohl das Blockschaltbild als auch das Flow-Chart sind schematisch vereinfacht, um das Wesentliche der Erfindung zu verdeutlichen.

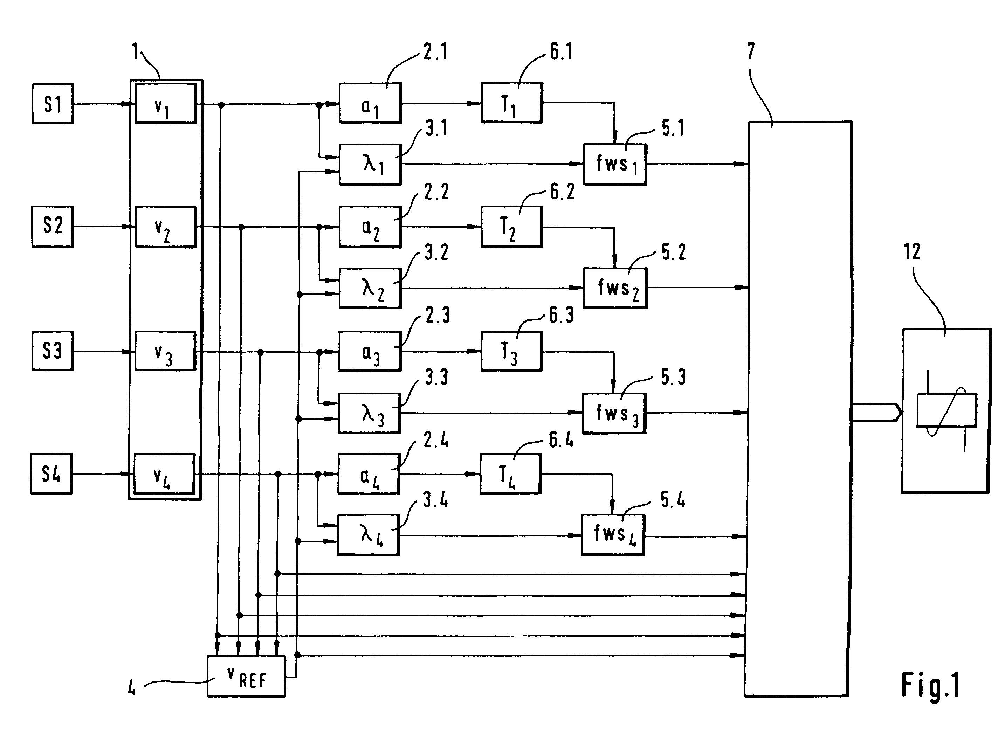

Nach Fig. 1 wird das Drehverhalten der einzelnen Fahrzeugräder mit Hilfe von Radsensoren S1 bis S4 ermittelt. In einer Auswerteschaltung 1 werden aus den Sensorsignalen Radgeschwindigkeitssignale $v_1$ bis $v_4$ oder entsprechende, in Form von Daten vorliegende Informationen gewonnen, die zur Weiterverarbeitung in dem dargestellten System geeignet sind. Die Darstellung kann eine festverdrahtete elektronische Logikschaltung darstellen oder die logischen Verknüpfungen und die Arbeitsweise eines Mikrocomputerprogramms symbolisieren. Heutige Antiblockiersysteme beruhen weitgehend auf Datenverarbeitung mit Mikroprozessoren und Mikrocomputern.

Aus den Geschwindigkeitssignalen oder -informationen $v_1$ bis $v_4$ der einzelnen Räder werden in Schaltkreisen 2 (2.1 bis 2.4) entsprechende Rad-Beschleunigungssignale $a_1$ bis $a_4$ und in den Schaltungsteilen oder Schaltungsblöcken 3(3.1 bis 3.4) Rad-Schlupfsignale $\lambda_1$ bis $\lambda_4$ gewonnen. Zur Errechnung des Radschlupfes $\lambda_i$ wird die jeweilige Radgeschwindigkeit $v_i$ mit einer Fahrzeug-Referenzgeschwindigkeit $v_{REF}$, die in einem Schaltblock 4 gebildet wird, verglichen.

Das Radschlupfsignal $\lambda_i$ passiert ein Tiefpaßfilter 5(5.1 bis 5.4), an dessen Ausgang der gefilterte Schlupfwert $fws_i$ bzw. $fws_1$ bis $fws_4$ zur Verfügung steht. Erfindungsgemäß werden Tiefpaßfilter erster Ordnung verwendet, die den gefilterten Schlupfwert nach der Beziehung

$$fws_i = \lambda_i (1 - e^{-t/T})$$

berechnen. Die Filterzeitkonstante $T_i$ wird erfindungsgemäß als Regelgröße in Abhängigkeit von der Beschleunigung $a_i$ des jeweiligen Rades i nach der Beziehung

$$T_i = T_{min} + (a_{grenz} - a_i)/k_1$$

mit i = 1 ... 4

variiert. Nimmt dabei der Ausdruck "$a_{grenz} - a_i$" negative Werte an, gilt der Mindestwert "$T_{min}$" der Filterzeitkonstanten.

Als Beschleunigungsgrenzwert hat sich beispielsweise ein Wert von

$$a_{grenz} = -2g$$

als zweckmäßig erwiesen. Allgemein dürfte für diesen Grenzwert $a_{grenz}$ ein Bereich von

$$-4g < a_{grenz} < -1g$$

geeignet sein.

Ein typischer Wert für den Mindestwert der Zeitkonstanten $T_{min}$ liegt bei

$$T_{min} = 70 \text{ ms};$$

es könnte auch ein anderer Wert im Bereich

$$50 \text{ ms} < T_{min} < 100 \text{ ms}$$

gewählt werden. Die geeigneten Größen für $a_{grenz}$ und $T_{min}$ lassen sich auch empirisch bestimmen. Die Umrechnungskonstante $k_1$ würde im vorgenannten "typischen" Beispiel beispielsweise einen Wert von etwa

$$k_1 = 300 \text{ m/s3}$$

annehmen. Bei $T_{min}$ = 70 ms, $a_{grenz}$ = -2g und $a_i$ = -7g ergäbe sich in diesem Fall eine Zeitkonstante von etwa 230 - 240 ms, ein durchaus brauchbarer Wert.

Nach Fig. 1 wird die variable Zeitkonstante $T_i$, die von der jeweiligen Radbeschleunigung $a_i$ abhängig ist, in einen Schaltungsteil 6(6.1 bis 6.4) gebildet. Die Ausgangssignale dieses Schaltungsteils 6 und des Schaltungsblocks 3, der den aktuellen Schlupfwert ermittelt, sind die Eingangssignale für das Tiefpaßfilter 5 (5.1 bis 5.4).

Schließlich ist in der Schaltungsanordnung nach Fig. 1 noch eine ABS-Logik 7 symbolisch dargestellt, in der auf Basis der gefilterten Schlupfwerte $fws_i$, der Radgeschwindigkeitswerte $v_i$ und der Referenzgeschwindigkeit $v_{REF}$ nach komplexen Algorithmen Bremsdrucksteuersignale ermittelt werden. Mit den Ausgangssignalen der ABS-Logik 7 werden Bremsdruckaktuatoren 12, zum Beispiel Hydraulikventile, angesteuert, die den Bremsdruck in den einzelnen Radbremsen festlegen und modulieren.

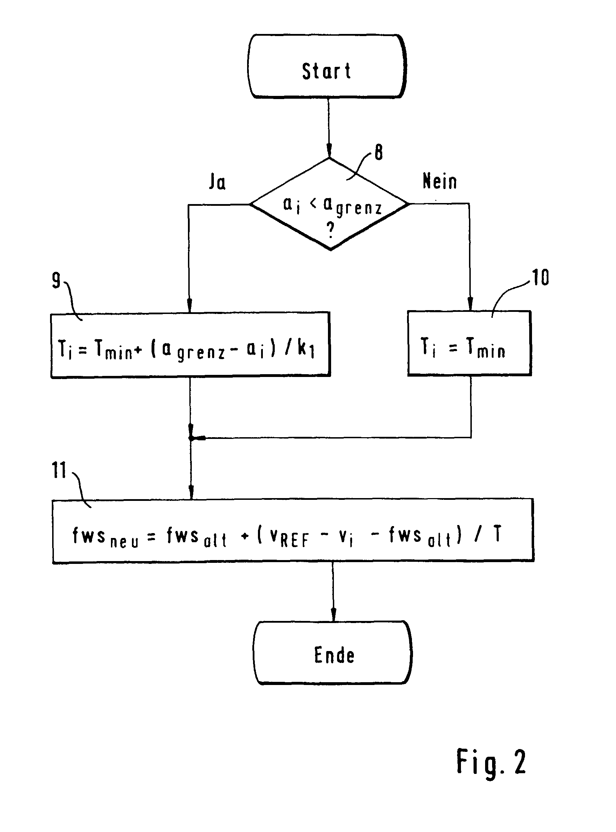

Fig. 2 zeigt die Folge von Abfrage- und Entscheidungsschritte, mit denen das erfindungsgemäße Verfahren realisiert wird. Nach dem START des Unterprogramms wird zunächst in einem Abfrageschritt 8 festgestellt, ob die Beschleunigung $a_i$ des untersuchten Rades i tatsächlich den vorgegebenen Beschleunigungsgrenzwert $a_{grenz}$ unterschreitet. Ist dies der Fall, wird, symbolisiert durch einen Block 9, in der zuvor bereits beschriebenen Weise die für das Rad i geltende Filterzeitkonstante $T_i$ nach der Beziehung

$$T_i = T_{min} + (a_{grenz} - a_i)/k_1$$

mit i = 1 ... 4

errechnet. Ist dagegen die Radbeschleunigung $a_i$ gleich oder größer als $a_{grenz}$, gilt der Nein-Ausgang der Verzweigung 8; in diesem Fall nimmt, symbolisiert durch Schritt 10, die Zeitkonstante $T_i$ des Tiefpasses bzw. Tiefpaßfilters 5(5.1 bis 5.4) nach Fig. 1 den vorgegebenen Minimalwert $T_i = T_{min}$ an.

Fig. 2 verdeutlicht, daß sich nach dem Ermitteln der Filterzeitkonstanten $T_i$ in einem Rechenschritt 11 die Berechnung des gefilterten Radschlupfwertes $fws_{neu}$ nach der mathematischen Beziehung

$$fws_{neu} = fws_{alt} + (v_{REF} - v_i - fws_{alt})/T$$

i = 1 ... 4

anschließt, der eine wichtige Eingangs- und Regelgröße für die ABS-Logik 7 (siehe Fig. 1) darstellt.

**Patentansprüche**

1. Verfahren zur Verbesserung des Regelverhaltens eines Blokkierschutzregelungssystems, bei dem aus dem Drehverhalten der Fahrzeugräder eine Fahrzeug-Referenzgeschwindigkeit, die als Bezugsgröße zur Ermittlung des Radschlupfes der einzelnen Räder dient, und Kriterien zum Erkennen einer Kurvenfahrtsituation und der Kurvenrichtung gewonnen werden, dadurch **gekennzeichnet**, daß zur Kurvenfahrterkennung die Radschlupfwerte mit Hilfe eines Tiefpasses gefiltert und die gefilterten Werte miteinander verglichen werden und daß als Tiefpaß (5,6) ein Filter erster Ordnung verwendet wird, dessen Zeitkonstante (T) in Abhängigkeit von der Beschleunigung ($a_i$) des jeweiligen Rades (i) variiert wird.

2. Verfahren nach Anspruch 1, dadurch **gekennzeichnet,** daß die Zeitkonstante ($T_i$) des Tiefpasses ausgehend von einem Minimalwert ($T_{min}$) nach der Beziehung

$$T_i = T_{min} + (a_{grenz} - a_i)/k_1$$

mit i = 1 ... 4

erhöht wird, wenn die Beschleunigung ($a_i$) des jeweiligen Rades (i) einen vorgegebenen Grenzwert ($a_{grenz}$) unterschreitet, wobei der Grenzwert ($a_{grenz}$) einen Wert zwischen -4g und -1g besitzt und der Minimalwert der Zeitkonstante ($T_{min}$) zwischen 50 ms und 100 ms liegt.

3. Verfahren nach Anspruch 2, dadurch **gekennzeichnet**, daß für den Grenzwert ($a_{grenz}$) der Beschleunigung ein Wert von etwa -2g und für den Minimalwert der Zeitkonstanten ($T_{min}$) ein Wert von etwa 70 ms gewählt werden.

4. Verfahren nach einem oder mehreren der Ansprüche 1 bis 3, dadurch **gekennzeichnet,** daß bei Verwendung von programmgesteuerten Schaltungen, wie Mikroprozessoren, Mikrocomputern etc., die gefilterten Radschlupfwerte (fws) radindividuell (i) nach der Beziehung

$$fws_{ineu} = fws_{ialt} + (v_{REF} - v_i - fws_{ialt})/T_i$$

i = 1 ... 4

gebildet werden, wobei mit '$fws_{neu}$, der im Arbeitstakt zuletzt ermittelte, mit '$fws_{alt}$, der im Arbeitstakt zuvor ermittelte gefilterte Radschlupfwert, mit '$v_{REF}$, eine Fahrzeugreferenzgeschwindigkeit, mit '$v_i$' die Radgeschwindigkeit und mit '$T_i$, die Zeitkontante bezeichnet sind.

**Claims**

1. A method of improving the control behavior of an anti-lock control system, wherein a vehicle reference speed that is used as a reference quantity to determine the wheel slip of the individual wheels is derived from the rotating behavior of the vehicle wheels, and criteria are obtained for identifying a cornering situation and the curve direction, **characterized** in that for identifying cornering the wheel slip values are filtered by way of a low-pass filter and the filtered values are compared, and in that a filter of first order is used as a low-pass filter (5, 6), the time constant (T) of which filter is varied as a function of the acceleration ($a_i$) of the respective wheel (i).

2. Method as claimed in claim 1, **characterized** in that the time constant ($T_i$) of the low-pass filter, starting from a minimum value ($T_{min}$), is increased according to the relation

$$T_i = T_{min} + (a_{grenz} - a_i)/k_1$$

with i = 1 ... 4
when the acceleration ($a_i$) of the respective wheel (i) drops below a predetermined limit value ($a_{grenz}$), and the limit value ($a_{grenz}$) ranges between -4g and -1g and the minimum value of the time constant ($T_{min}$) ranges between 50 msec and 100 msec.

3. Method as claimed in claim 2,
**characterized** in that a value of roughly -2g is chosen for the limit value ($a_{grenz}$) of the acceleration, and a value of roughly 70 msec is chosen for the minimum value of the time constant ($T_{min}$).

4. Method as claimed in any one or more of claims 1 to 3,
**characterized** in that when programmed circuits such as microprocessors, microcomputers, etc., are used, the filtered wheel slip values (fws) are produced for each individual wheel (i) according to the relation

$$fws_{ineu} = fws_{ialt} + (v_{REF} - v_i - fws_{ialt})/T_i$$

i = 1 ...4,
wherein '$fws_{neu}$' refers to the wheel slip value which was last determined in the working cycle, '$fws_{alt}$' refers to the filtered wheel slip value which was previously determined in the working cycle, '$v_{REF}$' refers to a vehicle reference speed, and '$v_i$' refers to the wheel speed and '$T_i$' to the time constant.

avec i = 1....4,
si l'accélération ($a_i$) de la roue correspondante (i) devient inférieure à une valeur de seuil ($a_{grenz}$) prédéterminée, la valeur de seuil ($a_{grenz}$) prenant une valeur comprise entre - 4g et -1g, et la valeur minimale de la constante de temps ($T_{min}$) se situant entre 50 ms et 100 ms.

3. Procédé selon la revendication 2, caractérisé en ce qu'on choisit, pour la valeur de seuil ($a_{grenz}$) de l'accélération, une valeur d'environ -2g, et pour la valeur minimale de la constante de temps ($T_{min}$), une valeur d'environ 70 ms.

4. Procédé selon l'une ou plusieurs des revendications 1 à 3, caractérisé en ce qu'on obtient les valeurs de glissement filtrées (fws) des roues prises individuellement (i), en utilisant des moyens programmables, tels que des microprocesseurs, des micro-ordinateurs, etc..., par la relation :

$$fws_{ineu} = fws_{ialt} + (v_{REF} - v_i - fws_{ialt})/Ti$$

i = 1...4
où '$fws_{neu}$' représente la dernière valeur calculée dans le cycle de calcul, '$fws_{alt}$' représente la valeur filtrée de glissement de roue initialement calculée dans le cycle de calcul, $V_{REF}$' représente une vitesse de référence du véhicule, '$V_i$' représente la vitesse de roue et '$T_i$' représente la constante de temps.

## Revendications

1. Procédé pour améliorer le comportement en régulation d'un système anti-blocage, dans lequel on calcule, à partir du comportement en rotation des roues du véhicule, une vitesse de référence du véhicule, qui sert de grandeur de référence pour le calcul du glissement des roues prises individuellement, et des critères de reconnaissance d'une situation de virage et de la direction de virage, caractérisé en ce que pour la reconnaissance du virage, on filtre les valeurs de glissement de roue à l'aide d'un filtre passe-bas et on compare entre elles les valeurs filtrées, et en ce qu'on utilise comme filtre passe-bas (5,6) un filtre du premier ordre dont la constante de temps (T) varie en fonction de l'accélération ($a_i$) de la roue correspondante (i).

2. Procédé selon la revendication 1, caractérisé en ce que la constante de temps ($T_i$) du filtre passe-bas est augmentée à partir d'une valeur minimale ($T_{min}$) par la relation :

$$T_i = T_{min} + (a_{grenz} - a_i) / k_1$$

Fig.1

EP 0 912 380 B1

Fig. 2